# EUROPÄISCHE PATENTSCHRIFT

(11) **EP 1 741 953 B1**
(45) Veröffentlichungstag und Bekanntmachung des Hinweises auf die Patenterteilung: **26.12.2007**
(21) Anmeldenummer: 06011912.0
(22) Anmeldetag: 09.06.2006
(51) Int. Cl.: F16F 9/58, B60G 7/04

(54) **Schwingungsdämpfer mit Zugangschlagfeder**
Vibration damper with rebound stop spring element
Amortisseur de vibrations avec butée de traction

(30) Priorität: 08.07.2005 DE 102005031939
(43) Veröffentlichungstag der Anmeldung: 10.01.2007
(73) Patentinhaber: ThyssenKrupp Bilstein Suspension GmbH, 58256 Ennepetal (DE)
(72) Erfinder: Fritz, Michael, 58339 Breckerfeld (DE); Klein, Uwe, 42369 Wuppertal (DE)
(74) Vertreter: Adams, Steffen

(56) Entgegenhaltungen:
- DE-A1- 19 626 143
- US-A1- 2004 060 787

## Beschreibung

Die Erfindung betrifft einen Schwingungsdämpfer gemäß dem Oberbegriff des Patentanspruchs 1.

Ein Schwingungsdämpfer mit wesentlichen Merkmalen des Obergriffs des Patentanspruchs 1 ist aus der DE 196 26 143 C2 bekannt. Bei diesem bekannten Schwingungsdämpfer ist im oberen Arbeitsraum ein Zuganschlag in der Form einer Zuganschlagfeder konzentrisch zur Kolbenstange angeordnet. In Richtung der Kolbenstangenführung wird die Zuganschlagfeder von einem Federteller zentriert, der ggf. einen inneren Gleitring aufweisen kann, um bei einer Relativbewegung zur Kolbenstange nur minimale Reibungskräfte auftreten zu lassen. Das andere Ende der Zuganschlagfeder liegt an einer Auflage eines Scheibenkörpers an. Dieser Scheibenkörper bildet den Federteller im Sinne der vorliegenden Erfindung und ist auf einem Zapfen der Kolbenstange zusammen mit dem Kolben verspannt. Auf der der Zuganschlagfeder abgewandten Seite des Scheibenkörpers weist dieser eine Stützfläche für die im kolbenstangenseitigen Arbeitsraum angeordneten Federscheiben auf.

Nachteilig bei dem aus der DE 196 26 143 C2 bekannten Schwingungsdämpfer ist, dass von der Zuganschlagfeder auf den Scheibenkörper (den Federteller) einwirkende Kräfte über die kolbenstangenseitigen Federscheiben unmittelbar in den Arbeitskolben eingeleitet werden. Dadurch wird die Dämpfungskennung des Dämpfungskolbens in unerwünschter Weise beeinträchtigt. Außerdem fließen die von der Zuganschlagfeder auf den Scheibenkörper (den Federteller) einwirkenden Kräfte über den Arbeitskolben in den Zapfen der Kolbenstange, sodass es zu Festigkeitsproblemen im Bereich des Zapfens kommen kann. Im Extremfall kann es bei hohen Zuganschlagkräften zu einer Verformung oder gar einem Abreißen des Zapfens kommen.

Ein Schwingungsdämpfer gemäß dem Oberbegriff des Patentanspruchs 1 ist aus der Druckschrift US 2004/0060787 A1 bekannt. Der die Zuganschlagfeder abstützende Federteller ist zwischen einem radialen Absatz der Kolbenstange und dem Arbeitskolben über eine Mutter verspannt. Die vorstehend genannten technischen Nachteile treffen für diesen bekannten Schwingungsdämpfer ebenso zu, denn der Federteller stützt sich über das kolbenstangenseitige Federscheibenpaket auf dem Arbeitskolben ab.

Der Erfindung liegt die Aufgabe zugrunde, einen Schwingungsdämpfer gemäß dem Oberbegriff des Patentanspruchs 1 derart weiterzubilden, dass eine von der Zuganschlagfeder auf den Federteller ausgeübte Kraft nicht die voranstehend genannten Nachteile bewirkt und ein Einbauraum maximaler Länge für die Zuganschlagfeder zur Verfügung gestellt wird.

Diese Aufgabe wird gemäß der Erfindung dadurch gelöst, dass der Federteller kraft- und/oder formschlüssig mit der Kolbenstange verbunden ist, so dass eine von der Zuganschlagfeder auf den Federteller ausgeübte Kraft direkt in die Kolbenstange eingeleitet wird.

Dadurch, dass eine kraft- und/oder formschlüssige Verbindung zwischen dem Federteller und der Kolbenstange vorgesehen ist, wird eine von der Zuganschlagfeder auf den Federteller ausgeübte Kraft unmittelbar in die Kolbenstange eingeleitet, ohne dass die Kraft auf die kolbenstangenseitigen Federscheiben des Arbeitskolbens und somit in den Arbeitskolben selbst eingeleitet wird. Auf diese Weise werden störende Einflüsse von Kräften, die von der Zuganschlagfeder ausgehen, auf die Dämpfungskennung des Arbeitskolbens verhindert. Ferner wird verhindert, dass hohe Zuganschlagkräfte über den Arbeitskolben in die Kolbenstangenverlängerung eingeleitet werden. Auf diese Weise werden mögliche Verformungen, Beschädigungen oder ein mögliches Abreißen der Kolbenstangenverlängerung vermieden.

Dadurch, dass der Federteller eine Stufenbohrung aufweist und dass der Bohrungsabschnitt mit dem größeren Durchmesser das Ende der Kolbenstange über eine axiale Länge überdeckt, wird eine geringe axiale Bauhöhe der aus den Bauteilen Kolbenstange, Federteller und Zuganschlagfeder bestehenden Anordnung erreicht. Zu diesem Zweck ist der zweite Bohrungsabschnitt, d.h. der Bohrungsabschnitt der Stufenbohrung, der den größeren Durchmesser aufweist, vorzugsweise mit einem Innengewinde versehen, welches mit einem am Ende der Kolbenstange vorgesehenen Außengewinde zusammenwirkt und eine Schraubverbindung bildet, die zur Befestigung des Federtellers an der Kolbenstange dient.

Gemäß der Erfindung wird der Federteller mit dem Bohrungsabschnitt, der den größeren Durchmesser aufweist, über das Ende der Kolbenstange geschoben oder geschraubt, sodass der Federteller mit einer Anschlagfläche, die im Übergangsbereich zwischen dem ersten und dem zweiten Bohrungsabschnitt der Stufenbohrung angeordnet ist, mit dem Absatz am Ende der Kolbenstange in Anlage gebracht wird. Durch die Verschraubung des Federtellers mit dem Ende der Kolbenstange stützt sich der Federteller an dieser Anschlagfläche gegen den entsprechenden Absatz am Ende der Kolbenstange ab.

Alternativ kann der auf die Kolbenstange aufgeschraubte Federteller mit seiner dem kolbenfernen Stirnfläche an einem radialen der Kolbenstange anliegen und sich an diesem Absatz abstützen. Bei dieser Ausführungsform kann der gesamte Federteller eine geringere Ausdehnung in radialer Richtung aufweisen, d.h. geringere Durchmesser aufweisen. Dadurch weist die ringförmige Stützfläche, auf der sich die Zuganschlagfeder abstützt, einen geringeren Durchmesser auf, so dass eine enger gewickelte Zuganschlagfeder verwendet werden kann, was Bauraum- und Gewichtseinsparungen ermöglicht.

Um den Kolben auf der Kolbenstangenverlängerung zu befestigen, wird dieser in an sich bekannter Weise mittels einer auf die Kolbenstangenverlängerung aufgeschraubten Kolbenmutter zwischen der zweiten Stützfläche des Federtellers einerseits und der Kolbenmutter andererseits verspannt.

Wenn sich der Absatz des Endes der Kolbenstange und die entsprechende, sich an diesen Absatz anlegende Anschlagfläche des Federtellers in radialer Richtung erstrecken, so trägt dies zu einer weiteren Reduzierung/Minimierung der axialen Bauhöhe bei.

Der erfindungsgemäße Federteller weist eine sich in axialer Richtung erstrekkende Führungsfläche zur Zentrierung und Führung der Zuganschlagfeder auf. Auf diese Weise wird eine sichere Führung der Zuganschlagfeder zumindest im unteren, d.h. in dem dem Arbeitskolben zugewandten Bereich erreicht.

Um zu erreichen, dass sich der Federteller mit seiner Anschlagfläche an den Absatz am Ende der Kolbenstange anlegt, ist der zweite Bohrungsabschnitt der Stufenbohrung an seinem dem ersten Bohrungsabschnitt zugewandten Ende mit einem Freistich versehen. Auf diese Weise wird erreicht, dass durch den Freistich ein radialer Raum zur Verfügung gestellt wird, in dem das Ende der Kolbenstange aufgenommen wird, ohne dass das Ende der Kolbenstange in radialer Richtung in Kontakt mit dem Material des Federtellers gerät. Dadurch kann sich die Anschlagfläche des Federtellers vollständig an den Absatz am Ende der Kolbenstange anlegen.

Um die für eine Verschraubung des Federtellers mit der Kolbenstange erforderlichen Kräfte aufzubringen, ist an dem Federteller eine Schlüsselfläche zum Ansetzen eines Verschraubungswerkzeuges vorgesehen. Als Verschraubungswerkzeuge kommen insbesondere Schraubenschlüssel infrage, es können jedoch auch solche Verschraubungswerkzeuge zum Einsatz kommen, die eine das zu verschraubende Werkstück umfassende Schlinge aufweisen, wobei zwischen der Schlinge und dem Werkstück ein Reibschluss zur Übertragung der für die Verschraubung notwendigen Drehmomente hergestellt wird.

Eine kostengünstige Zuganschlagfeder ist als eine aus gewundenem Stahldraht gebildete Schraubenfeder ausgebildet. Besonders vorteilhaft ist es, wenn das Gewinde des Federtellers, mit dem dieser mit der Kolbenstange verschraubt ist, eine der Wicklungsrichtung der Zuganschlagfeder entgegengesetzt orientierte Steigung aufweist. Ist die als Schraubenfeder ausgebildete Zuganschlagfeder eine rechtsgewickelte Feder, so weist der Federteller ein Linksgewinde auf, und umgekehrt. Dies hat den Vorteil, dass von der Zuganschlagfeder auf den Federteller einwirkende Drehmomente nicht zu einem Losschrauben des Federtellers führen, sondern in die Richtung wirken, mit der der Federteller an der Kolbenstange festgeschraubt wird. Ein unerwünschtes Lösen der Schraubverbindung zwischen Federteller und Kolbenstange wird auf diese Weise verhindert.

Grundsätzlich ist es auch denkbar, dass das Gewinde des Federtellers, mit dem dieser mit der Kolbenstange verschraubt ist, eine Steigung aufweist, die in dieselbe Richtung orientiert ist wie die Wicklungsrichtung der Zuganschlagfeder. In diesem Fall sollte eine zusätzliche Verdrehsicherung an dem Federteller und/oder an der Kolbenstange vorgesehen sein, mit der ein Losschrauben des Federtellers durch die von der Zuganschlagfeder auf ihn übertragenen Drehmomente sicher verhindert wird. Die Verdrehsicherung kann dabei z.B. als herkömmliche kraft- und formschlüssige Verdrehsicherung ausgebildet sein, wie sie etwa für Muttern bei Mutter-Schrauben-Verbindungen verwendet wird.

Im Folgenden wird eine bevorzugte Ausführungsform der Erfindung anhand einer Zeichnung näher erläutert. Im Einzelnen zeigen
- Fig. 1: eine Anordnung aus Kolbenstange, Arbeitskolben, Federteller und Zuganschlagfeder in schematischer Darstellung in Seitenansicht;
- Fig. 2: eine vergrößerte Seitenansicht der Anordnung gemäß Fig. 1
- Fig. 3: eine gegenüber den Fig. 1 und 2 abgewandelte Ausführungsform der Erfindung.

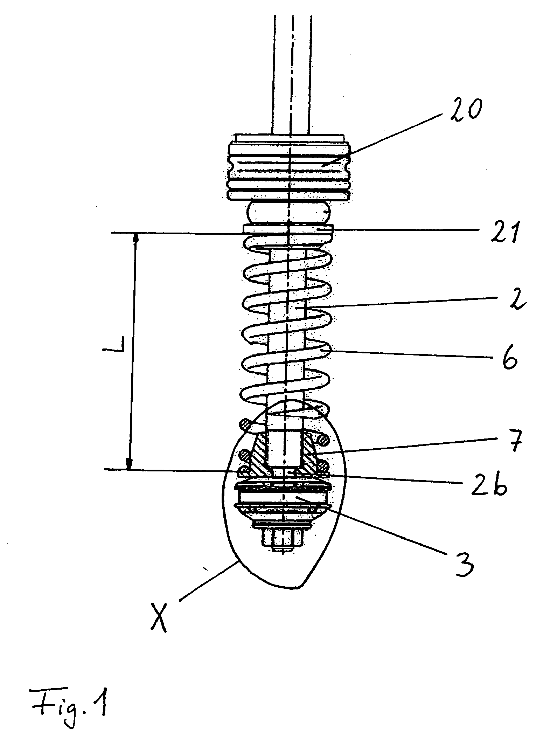

In Fig. 1 ist eine Anordnung umfassend eine Kolbenstange 2 mit einer Kolbenstangenverlängerung 2b, einem Kolben 3, einem Federteller 7, einer Zuganschlagfeder 6 und einem Dichtungs- und Führungspaket 20 dargestellt, wobei das Dämpferrohr weggelassen wurde, um eine bessere zeichnerische Darstellung der Erfindung zu erreichen. Auf der dem Arbeitskolben zugewandten Seite des Dichtungs- und Führungspaketes 20 ist eine Stützplatte 21 vorgesehen, gegen die sich die Zuganschlagfeder 6 mit ihrem dem Arbeitskolben abgewandten Ende abstützt.

In Fig. 1 ist die axiale Baulänge zwischen der Stützplatte 21 und der ersten Stützfläche 8 des Federtellers 7 mit L bezeichnet. Bei der Erfindung geht es darum, diese axiale Baulänge L möglichst groß zu gestalten und dabei gleichzeitig zu gewährleisten, dass von der Zuganschlagfeder 6 auf den Federteller 7 ausgeübte Kräfte und Momente unmittelbar in die Kolbenstange 2 eingeleitet werden. Durch den großen axialen Bauraum für die Zuganschlagfeder 6 kann deren Länge bei ansonsten gleichen Einbauverhältnissen maximiert werden, so dass die geforderten Eigenschaften der Zuganschlagfeder 6 wie z.B. gefordertes Blockmaß und geforderter Federweg optimal eingestellt werden können. Bei der Erfindung wird ein großer axialer Überdeckungsbereich erzielt, in welchem der Federteller 7 die Kolbenstange 2 überdeckt/umgibt, so dass der für die Unterbringung des Federtellers erforderliche Bauraum gering gehalten wird.

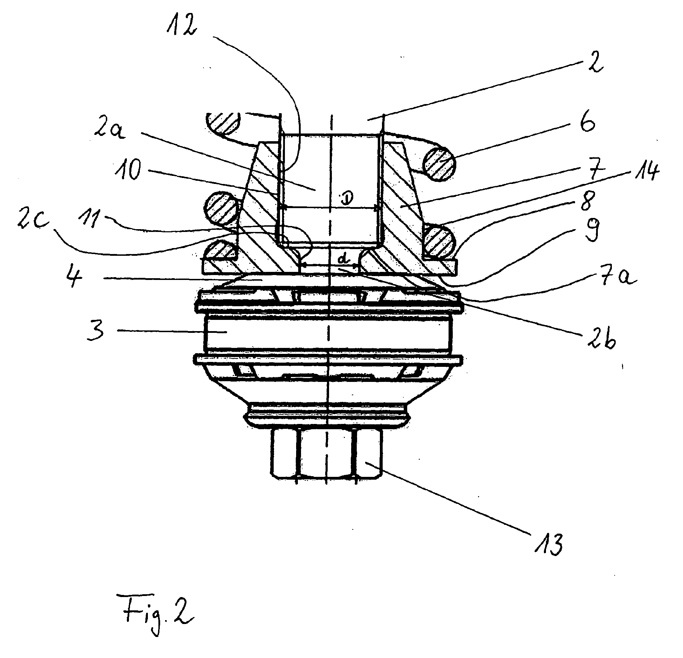

In Fig. 2 ist der in Fig. 1 mit X gekennzeichnete Bereich in vergrößerter Darstellung dargestellt. Es ist gut zu erkennen, dass die Kolbenstange 2 an ihrem Ende 2a ein Außengewinde aufweist. Der Federteller 7 weist eine Stufenbohrung 10 auf, welche einen ersten Bohrungsabschnitt 11 mit einem kleinen Durchmesser d und einen zweiten Bohrungsabschnitt 12 mit einem großen Durchmesser D umfasst. Der zweite Bohrungsabschnitt 12 weist ein Innengewinde auf, welches mit dem Außengewinde des Endes 2a der Kolbenstange 2 verschraubt ist.

Der zweite Bohrungsabschnitt 12 weist an seinem dem ersten Bohrungsabschnitt 11 zugewandten Ende einen Freistich auf. Dieser Freistich bewirkt, dass der Federteller mit seiner Anschlagfläche 7a an dem Absatz 2c des Endes 2a der Kolbenstange 2 anliegt.

Arbeitskolbenseitig stützt sich die Zuganschlagfeder 6 an der ersten Stützfläche 8 des Federtellers 7 ab. Weiter weist der Federteller 7 eine dem Arbeitskolben zugewandte zweite Stützfläche 9 auf, an der sich die Federscheiben 4 abstützen.

Der Kolben 3 ist konzentrisch zur Kolbenstangenverlängerung 2b angeordnet und mittels der Kolbenmutter 13, die auf ein Außengewinde der Kolbenstangenverlängerung aufgeschraubt ist, verspannt. Dabei stützt sich der verspannte Kolben 3 einerseits gegen die zweite Anschlagfläche 9 des Federtellers 7 und andererseits gegen die dem Arbeitskolben zugewandte Stirnseite der Kolbenmutter 13 ab.

In Fig. 2 ist gut zu erkennen, dass der Federteller 7 eine sich axial erstreckende Stützfläche für die unterste Windung der als Schraubenfeder ausgebildeten Zuganschlagfeder 6 aufweist. Das Innengewinde des Federtellers, mit dem dieser mit dem Ende 2a der Kolbenstange 2 verschraubt ist, weist dabei eine Steigung auf, die genau in die umgekehrte Richtung orientiert ist wie die Wicklungsrichtung der Schraubenfeder.

Wie der Fig. 2 insbesondere zu entnehmen ist, liegt eine große axiale Überdekkung des zweiten Bohrungsabschnittes 12 der Stufenbohrung 10 des Federtellers 7 und des Endes 2a der Kolbenstange 2 vor. Diese große axiale Überdeckung bewirkt, dass die axiale Bauhöhe der Anordnung, bestehend aus Federteller 7, Kolbenstange 2 und Zuganschlagfeder 6, besonders gering ist. Ebenfalls trägt zur Verringerung der axialen Bauhöhe bei, dass die Anschlagfläche 7a und der Absatz 2c des Endes 2a der Kolbenstange 2 sich genau in radialer Richtung erstrecken und nicht in einem Winkel zur Längsachse der Kolbenstange angeordnet sind.

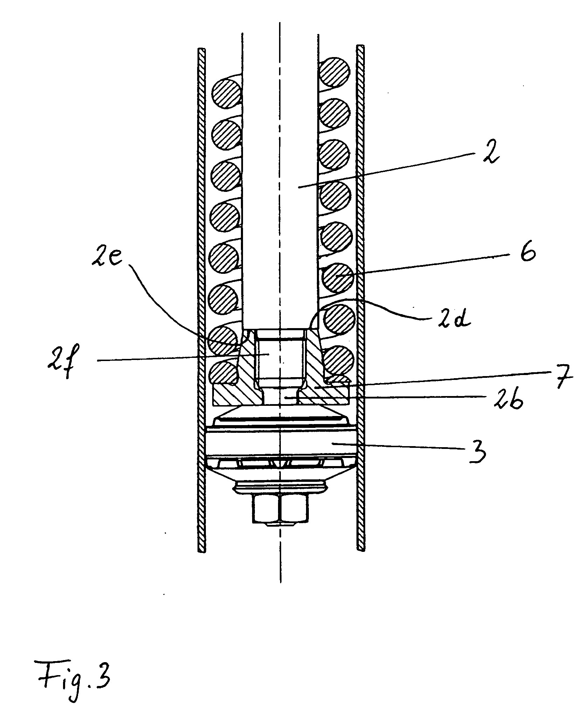

Jn Fig. 3 ist eine gegenüber dem Ausführungsbeispiel gemäß den Fig. 1 und 2 abgewandelte Ausführungsform der Erfindung dargestellt. Bei dieser Ausführungsform ist der Federteller 7 mit seinem in dem Bohrungsabschnitt 12 vorgesehenen Innengewinde auf einen Kolbenstangenzapfen 2f mit Außengewinde aufgeschraubt. Der Kolbenstangenzapfen 2f ist im Durchmesser gegenüber dem Durchmesser der Kolbenstange deutlich reduziert. Durch die Durchmesserreduzierung der Kolbenstange 2 zur Ausbildung des mit dem Außengewinde versehenen Kolbenstangenzapfens 2f ist ein radialer Absatz 2e ausgebildet, gegen den sich der mit dem Kolbenstangenzapfen 2f verschraubte Federteller 7 mit seiner kolbenfernen Stirnseite 2d anlegt. Bei dieser Ausführungsform der Erfindung weist der Federteller 7 eine sehr geringe radiale Erstreckung auf. Dadurch, dass der Federteller 7 mit seinem in dem Bohrungsabschnitt 12 angeordneten Innengewinde auf einen im Durchmesser reduzierten Kolbenstangenzapfen 2f aufgeschraubt ist, wird erreicht, dass der Federteller 7 außer mit seiner Auflagefläche für die Zuganschlagfeder nur um ein sehr geringes radiales Maß über die radiale Ausdehnung der Kolbenstange 2 hinaus übersteht. Durch diese Ausgestaltung der Erfindung ist die Verwendung einer besonders eng gewickelten Zuganschlagfeder 6 möglich. Damit sich der Federteller 7 mit seiner kolbenfernen Stirnseite 2d an den radialen Absatz 2e der Kolbenstange anlegen kann, ist im Bereich des Übergangs vom Bohrungsabschnitt 12 in den Bohrungsabschnitt 11 ein Freistich vorgesehen.

### Bezugszeichenliste

- 2.: Kolbenstange
- 2a: Ende
- 2b: Kolbenstangenverlängerung
- 2c: Absatz
- 2d: Stirnseite
- 2e: radialer Absatz
- 2f: Kolbenstangenzapfen
- 3.: Kolben
- 4.: Federscheibe
- 6.: Zuganschlagfeder
- 7.: Federteller
- 7a: Anschlagfläche
- 8.: Stützfläche
- 9.: Stützfläche
- 10.: Stufenbohrung
- 11.: Bohrungsabschnitt
- 12.: Bohrungsabschnitt
- 13.: Kolbenmutter
- 14.: Führungsfläche
- 20.: Dichtungs- und Führungspaket
- 21.: Stützplatte
- L: axiale Baulänge
- d: Durchmesser
- D: Durchmesser
- X: Bereich

## Patentansprüche

1. Schwingungsdämpfer mit einem mit Dämpfungsmedium gefüllten Dämpferrohr, einer in dem Dämpferrohr oszillierend hin- und her bewegbaren Kolbenstange (2), die mit ihrem einen Ende (2a) in das Dämpferrohr hineinragt und die an diesem Ende (2a) eine Kolbenstangenverlängerung (2b) und einen Absatz (2c) aufweist, einem den Innenraum des Dämpferrohres in einen kolbenstangenfernen und einen kolbenstangenseitigen Arbeitsraum unterteilenden Kolben (3), der koaxial zu der Kolbenstangenverlängerung (2b) angeordnet ist und der Drosselöffnungen sowie in jedem Arbeitsraum mindestens eine diese Drosselöffnungen abdeckende Federscheibe (4, 5) aufweist, einer im kolbenstangenseitigen Arbeitsraum angeordneten Zuganschlagfeder (6) sowie einem im kolbenstangenseitigen Arbeitsraum angeordneten Federteller (7), der eine erste Stützfläche (8) aufweist, gegen die sich die Zuganschlagfeder (6) abstützt und der eine zweite Stützfläche (9) für die mindestens eine, im kolbenstangenseitigen Arbeitsraum angeordnete Federscheibe (4) aufweist, wobei der Federteller (7) eine Stufenbohrung (10) aufweist, welche einen ersten Bohrungsabschnitt (11) mit einem kleinen Durchmesser (d) und einen zweiten Bohrungsabschnitt (12) mit einem größeren Durchmesser (D) umfasst, wobei der erste Bohrungsabschnitt (11) der Kolbenstangenverlängerung (2b) und der zweite Bohrungsabschnitt (12) dem Ende (2a) der Kolbenstange (2) zugeordnet ist, **dadurch gekennzeichnet, dass** der Federteller (7) kraft- und/oder formschlüssig mit der Kolbenstange (2) verbunden ist, so dass eine von der Zuganschlagfeder (6) auf den Federteller (7) ausgeübte Kraft direkt in die Kolbenstange (2) eingeleitet wird.

2. Schwingungsdämpfer nach Anspruch 1, **dadurch gekennzeichnet, dass** der zweite Bohrungsabschnitt (12) ein Innengewinde aufweist, das mit einem am Ende (2a) der Kolbenstange (2) vorgesehenen Außengewinde eine Schraubverbindung zur Befestigung des Federtellers (7) an der Kolbenstange (2) bildet.

3. Schwingungsdämpfer nach Anspruch 1 oder 2, **dadurch gekennzeichnet, dass** der Federteller (7) im Übergangsbereich von dem ersten (11) zum zweiten Bohrungsabschnitt (12) eine Anschlagfläche (7a) aufweist, die an dem Absatz (2c) am Ende (2a) der Kolbenstange (2) anliegt.

4. Schwingungsdämpfer nach Anspruch 1 oder 2, **dadurch gekennzeichnet, dass** der Federteller (7) mit seiner kolbenfernen Stirnseite (2d) an einem radialen Absatz (2e) der Kolbenstange (2) anliegt.

5. Schwingungsdämpfer nach den voranstehenden Ansprüchen, **dadurch gekennzeichnet, dass** der Kolben (3) mittels einer auf die Kolbenstangenverlängerung (2b) aufgeschraubten Kolbenmutter (13) zwischen der zweiten Stützfläche (9) des Federtellers (7) und der Kolbenmutter (13) verspannt ist.

6. Schwingungsdämpfer nach den voranstehenden Ansprüchen, **dadurch gekennzeichnet, dass** sich der Absatz (2c) des Endes (2a) der Kolbenstange (2) und die Anschlagfläche (7a) in radialer Richtung erstrecken.

7. Schwingungsdämpfer nach den voranstehenden Ansprüchen, **dadurch gekennzeichnet, dass** der Federteller (7) eine Führungsfläche (14) zur Zentrierung und Führung der Zuganschlagfeder (6) aufweist.

8. Schwingungsdämpfer nach den voranstehenden Ansprüchen, **dadurch gekennzeichnet, dass** der zweite Bohrungsabschnitt (12) der Stufenbohrung (10) an seinem dem ersten Bohrungsabschnitt (11) zugewandten Ende einen Freistich aufweist.

9. Schwingungsdämpfer nach den voranstehenden Ansprüchen, **dadurch gekennzeichnet, dass** der Federteller (7) eine Schlüsselfläche zum Ansetzen eines Verschraubungswerkzeugs wie z.B. eines Schraubenschlüssels aufweist.

10. Schwingungsdämpfer nach den voranstehenden Ansprüchen, **dadurch gekennzeichnet, dass** die Zuganschlagfeder (6) als Schraubenfeder ausgebildet ist.

11. Schwingungsdämpfer nach Anspruch 10, **dadurch gekennzeichnet, dass** das Gewinde des Federtellers (7), mit dem er mit der Kolbenstange (2) verschraubt ist, eine der Wicklungsrichtung der Zuganschlagfeder (6) entgegengesetzt orientierte Steigung aufweist.

## Claims

1. Vibration damper having: a damper tube filled with a damping medium; a piston rod (2) which can move in an oscillating and reciprocal manner in the damper tube and one end (2a) of which protrudes into the damper tube and which comprises at this end (2a) a piston rod extension (2b) and a shoulder (2c); a piston (3) which divides the interior of the damper tube into a working chamber remote from the piston rod and a piston rod-side working chamber and which is disposed coaxially with respect to the piston rod extension (2b) and comprises restrictor openings and at least one spring washer (4, 5) covering these restrictor openings in each working chamber; a buffer spring (6) disposed in the piston rod-side working chamber; and also a spring collar (7) which is disposed in the piston rod-side working chamber and has a first support surface (8) supporting the buffer spring (6) and a second support surface (9) for the at least one spring washer (4) disposed in the piston rod-side working chamber, wherein the spring collar (7) comprises a stepped bore (10) which has a first bore section (11) having a small diameter (d) and a second bore section (12) having a larger diameter (D), wherein the first bore section (11) is allocated to the piston rod extension (2b) and the second bore section (12) is allocated to the end (2a) of the piston rod (2), **characterised in that** the spring collar (7) is connected to the piston rod (2) in a non-positive and/or positive locking manner so that a force exerted by the buffer spring (6) onto the spring collar (7) is introduced directly into the piston rod (2).

2. Vibration damper as claimed in Claim 1, **characterised in that** the second bore section (12) has an inner thread which forms a screw connection with an outer thread provided on the end (2a) of the piston rod (2) for attaching the spring collar (7) to the piston rod (2).

3. Vibration damper as claimed in Claim 1 or 2, **characterised in that** the spring collar (7) comprises a stop surface (7a) in the transition region from the first (11) to the second bore section (12), said stop surface lying against the shoulder (2c) on the end (2a) of the piston rod (2).

4. Vibration damper as claimed in Claim 1 or 2, **characterised in that** the spring collar (7) lies with its end side (2d), remote from the piston, against a radial shoulder (2e) of the piston rod (2).

5. Vibration damper as claimed in the preceding Claims, **characterised in that** the piston (3) is braced between the second support surface (9) of the spring collar (7) and a piston nut (13) by means of the piston nut (13) screwed onto the piston rod extension (2b).

6. Vibration damper as claimed in the preceding Claims, **characterised in that** the shoulder (2c) of the end (2a) of the piston rod (2) and the stop surface (7a) extend in the radial direction.

7. Vibration damper as claimed in the preceding Claims, **characterised in that** the spring collar (7) comprises a guide surface (14) for centring and guiding the buffer spring (6).

8. Vibration damper as claimed in the preceding Claims, **characterised in that** the second bore section (12) of the stepped bore (10) comprises a recess at its end facing the first bore section (11).

9. Vibration damper as claimed in the preceding Claims, **characterised in that** the spring collar (7) comprises a key surface for attaching a screwing tool such as for example a wrench.

10. Vibration damper as claimed in the preceding Claims, **characterised in that** the buffer spring (6) is formed as a helical spring.

11. Vibration damper as claimed in Claim 10, **characterised in that** the thread of the spring collar (7), by means of which the spring collar is screwed to the piston rod (2), has a pitch oriented in the opposite direction to the winding direction of the buffer spring (6).

## Revendications

1. Amortisseur comprenant un tube d'amortisseur rempli d'un agent d'amortissement, une tige de piston (2) mobile de manière oscillante, en va et vient, dans le tube d'amortisseur, laquelle tige plonge avec son extrémité (2a) dans le tube d'amortisseur et présente à cette extrémité (2a) un prolongement (2b) et un épaulement (2c), un piston (3) divisant l'espace interne du tube d'amortisseur en une chambre de travail écartée de la tige de piston et une chambre de travail côté tige de piston, lequel piston est agencé coaxialement au prolongement de la tige de piston (2b), et présente des ouvertures d'étranglement de même qu'au moins une rondelle à ressort (4, 5) recouvrant ces ouvertures d'étranglement dans chaque chambre de travail, un ressort amortisseur de traction (6) agencé dans la chambre de travail côté tige de piston, de même qu'une coupelle de ressort (7) agencée dans la chambre de travail écartée de la tige de piston, laquelle présente une première surface d'appui (8) contre laquelle s'appuie le ressort amortisseur de traction (6), et présente une seconde surface d'appui (9) pour la rondelle à ressort (4) au moins agencée dans la chambre de travail côté tige de piston, la coupelle de ressort (7) présentant un alésage à gradin (10) qui comprend une première section d'alésage (11) de petit diamètre (d), et une seconde section d'alésage (12) de plus grand diamètre (D), la première section d'alésage (11) étant associée au prolongement (2b) de la tige de piston et la seconde section d'alésage (12) étant associée à l'extrémité (2a) de la tige de piston (2), **caractérisé en ce que** la coupelle de ressort (7) est assemblée par frottement et/ou par emboitement avec la tige de piston (2), de telle sorte qu'une force exercée par le ressort amortisseur de traction (6) sur la coupelle de ressort (7) est transmise directement dans la tige de piston (2).

2. Amortisseur selon la revendication 1, **caractérisé en ce que** la seconde section d'alésage (12) présente un filetage interne qui forme avec un filetage externe prévu à l'extrémité (2a) de la tige de piston (2) un assemblage vissé pour fixer la coupelle de ressort (7) à la tige de piston (2).

3. Amortisseur selon la revendication 1 ou 2, **caractérisé en ce que** la coupelle de ressort (7) présente une surface de butée (7a) dans la région de transition entre la première (11) et la seconde (12) sections d'alésage, laquelle s'appuie sur l'épaulement (2c) à l'extrémité (2a) de la tige de piston (2).

4. Amortisseur selon la revendication 1 ou 2, **caractérisé en ce que** la coupelle de ressort (7) s'appuie avec sa face frontale (2d) écartée du piston sur un épaulement radial (2e) de la tige de piston (2).

5. Amortisseur selon les revendications précédentes, **caractérisé en ce que** le piston (3) est serré au moyen d'un écrou de piston (13) vissé sur le prolongement (2b) de la tige de piston, entre la seconde surface d'appui (9) de la coupelle de ressort (7) et l'écrou de piston (13).

6. Amortisseur selon les revendications précédentes, **caractérisé en ce que** l'épaulement (2c) de l'extrémité (2a) de la tige de piston (2) et la surface de butée (7a) s'étendent dans une direction radiale.

7. Amortisseur selon les revendications précédentes, **caractérisé en ce que** la coupelle de ressort (7) présente une surface de guidage (14) pour centrer et guider le ressort amortisseur de traction (6).

8. Amortisseur selon les revendications précédentes, **caractérisé en ce que** la seconde section d'alésage (12) de l'alésage à gradin (10) présente un dégagement à son extrémité tournée vers la première section d'alésage (11).

9. Amortisseur selon les revendications précédentes, **caractérisé en ce que** la coupelle de ressort (7) présente une surface pour attacher un outil de vissage, comme par exemple une clé.

10. Amortisseur selon les revendications précédentes, **caractérisé en ce que** le ressort amortisseur de traction (6) est réalisé sous la forme d'un ressort bobiné.

11. Amortisseur selon la revendication 10, **caractérisé en ce que** le filetage de la coupelle de ressort (7) à l'aide duquel celle-ci est vissée sur la tige de piston (2) présente un pas orienté dans le sens opposé à la direction d'enroulement du ressort amortisseur de traction (6).
